# EUROPÄISCHE PATENTSCHRIFT

(11) **EP 3 468 340 B1**
(45) Veröffentlichungstag und Bekanntmachung des Hinweises auf die Patenterteilung: **20.05.2020**
(21) Anmeldenummer: 17729375.0
(22) Anmeldetag: 16.05.2017
(51) Int. Cl.: A01C 23/00, A01M 7/00

(54) **REGELVORRICHTUNG, LANDWIRTSCHAFTLICHES NUTZFAHRZEUG UND VERFAHREN ZUM BETREIBEN EINES LANDWIRTSCHAFTLICHEN NUTZFAHRZEUGES**
CONTROL DEVICE, AGRICULTURAL VEHICLE AND METHOD FOR OPERATING AN AGRICULTURAL VEHICLE
DISPOSITIF DE RÉGULATION, VÉHICULE UTILITAIRE AGRICOLE ET PROCÉDÉ D'UTILISATION D'UN VÉHICULE UTILITAIRE AGRICOLE

(30) Priorität: 10.06.2016 DE 102016110693
(43) Veröffentlichungstag der Anmeldung: 17.04.2019
(73) Patentinhaber: Amazonen-Werke H. Dreyer GmbH & Co. KG, 49205 Hasbergen (DE); HYDAC Systems & Services GmbH, 66280 Sulzbach/Saar (DE)
(72) Erfinder: GROSSE PRUES, Frank, 49593 Bersenbrück (DE); KOMMA, Georg, 66386 Sankt Ingbert (DE); KRUPP, Patrick, 66540 Neunkirchen (DE); KIEFER, Timo, 66740 Saarlouis (DE); KOHL, Peter, 66440 Blieskastel (DE)
(74) Vertreter: Grünecker Patent- und Rechtsanwälte PartG mbB
(86) Internationale Anmeldenummer: PCT/EP2017/061681
(87) Internationale Veröffentlichungsnummer: WO 2017/211547

(56) Entgegenhaltungen:
- EP-A1- 0 518 226
- DE-U1-202007 011 631
- US-A1- 2007 289 438

## Beschreibung

Die Erfindung betrifft eine Regelvorrichtung für ein landwirtschaftliches Nutzfahrzeug zur Regelung der Neigung eines Verteilergestänges gemäß dem Oberbegriff des Patentanspruchs 1. Ferner betrifft die Erfindung ein landwirtschaftliches Nutzfahrzeug gemäß Anspruch 12, sowie ein Verfahren zum Betreiben eines landwirtschaftlichen Nutzfahrzeuges gemäß Anspruch 13.

Derartige landwirtschaftliche Nutzfahrzeuge, welche auch Feldspritzen genannt werden, werden zum Ausbringen von Material, wie Düngemittel, Pflanzenschutzmittel oder Saatgut verwendet. Um das Material großflächig auf dem zu bearbeitenden Feldboden auszubringen, weisen die landwirtschaftlichen Nutzfahrzeuge ein Verteilergestänge auf, das eine Arbeitsbreite von bis zu 40m umfassen kann. Am Verteilergestänge sind Sprühdüsen befestigt, welche das Material auf den zu bearbeitenden Boden sprühen. Für eine effiziente Ausbringung des Materials soll der Abstand zwischen dem Verteilergestänge und dem Boden über die gesamte Arbeitsbreite möglichst konstant bleiben. Problematisch ist es, wenn das landwirtschaftliche Nutzfahrzeug in unterschiedlich tiefen Spurrillen des Bodens, einseitig in einer Furche oder an einem Hang des zu bearbeitenden Feldes fährt. Bei derartigen Bodenunebenheiten können die Enden des Verteilergestänges in Bodenkontakt kommen und beschädigt werden. Zusätzlich ist die homogene Verteilung des auszubringenden Materials, durch nachteilige Drifteffekte aufgrund der geneigten Stellung des Verteilergestänges, nicht mehr gegeben.

Um unerwünschte Bewegungen um die Fahrzeuglängsachse auszugleichen, sind Vorrichtungen bekannt, die über eine Pendelaufhängung und über Neigungssensoren oder Abstandssensoren verfügen und welche über Stellorgane diese Neigung auszugleichen versuchen. Generell wird hierbei eine horizontale Lage des Verteilergestänges in Relation zu dem bearbeitenden Boden angestrebt. Es wird beispielhaft auf die DE 20 2007 011 631 U1 verwiesen. Dort wird eine Aufhängvorrichtung für ein Verteilergestänge beschrieben, wobei zwei fluidische Niveauventile im Bereich der Aufhängung eines Hilfsrahmens am Fahrzeug angeordnet sind. Je nach Neigungsstellung des Verteilergestänges in Bezug auf das Fahrzeug, werden die Ventile unterschiedlich geöffnet oder geschlossen. Im Speziellen geben die Ventile proportional zur Auslenkung des Verteilergestänges einen Druck auf ein Stellorgan ab, was ein Umströmen des Fluids in das gekoppelte Stellorgan bewirkt. Das Stellorgan, welches zweckmäßigerweise als ein pneumatisches und/oder hydraulisches Stellorgan ausgebildet ist, wird dadurch aktiviert.

Eine andere gattungsgemäße Regelvorrichtung ist aus US 2007/289438 A1 bekannt.

Die Aktivierung des Stellorgans bewirkt eine Verschwenkung des Verteilergestänges. Das Stellorgan kann somit die Neigung des Verteilergestänges ändern. Ist die Neigung wieder ausgeglichen, schließt das Ventil wieder.

Es gibt allerdings Situationen, wie beispielsweise den Straßentransport oder beim Ein- und Ausklappen des Verteilergestänges, da soll das Verteilergestänge starr mit dem landwirtschaftlichen Fahrzeug über das Stellorgan verbunden sein. Dazu sind Sperrventile in den Zuführleitungen zu dem Stellorgan angeordnet. Sobald diese geschlossen sind, kann kein Fluid aus dem Stellorgan entweichen und das Verteilergestänge ist starr mit dem landwirtschaftlichen Nutzfahrzeug verbunden. Das anschließende Öffnen der Sperrventile, insbesondere bei asymmetrisch geklappten Verteilergestängen, kann zu unkontrollierten und damit schädlichen Bewegungen des Verteilergestänges führen. Die Sperrventile sind hierbei idealerweise sitzdicht ausgeführt. Das bedeutet, dass bei geschlossenem Zustand kein Öl passieren kann.

Der Erfindung liegt daher die Aufgabe zugrunde, eine Regelvorrichtung für ein landwirtschaftliches Nutzfahrzeug anzugeben, welches die Gefahr von unkontrollierten Bewegungen des Verteilergestänges, insbesondere beim Öffnen von Sperrventilen, verringert. Der Erfindung liegt ferner die Aufgabe zu Grunde, eine landwirtschaftliches Nutzfahrzeug, sowie ein Verfahren zum Betreiben eines landwirtschaftlichen Nutzfahrzeuges anzugeben.

Diese Aufgabe wird erfindungsgemäß durch eine Regelvorrichtung mit den Merkmalen des Anspruchs 1 gelöst. Im Hinblick auf das landwirtschaftliche Nutzfahrzeug wird die Aufgabe durch den Gegenstand des Anspruchs 12 gelöst. Ferner wird die Aufgabe im Hinblick auf das Verfahren durch den Gegenstand des Anspruchs 13 gelöst.

Die Erfindung beruht auf dem Gedanken, eine Regelvorrichtung für ein landwirtschaftliches Nutzfahrzeug mit einem Verteilergestänge zum Ausbringen von Material, wie Düngemittel, Pflanzenschutzmittel oder Saatgut, anzugeben, welche eine Regeleinheit und wenigstens zwei Druckregelventile zur Regelung der Neigung des Verteilergestänges, welche mit der Regeleinheit verbunden sind, umfasst. Jedem Druckregelventil ist ein Sperrventil und ein Drucksensor zugeordnet, wobei das Sperrventil zwischen dem Drucksensor und dem Druckregelventil angeordnet ist.

Die Erfindung hat den Vorteil, dass die Druckregelventile eine präzise Steuerung des Drucks zur Entgegenwirkung einer auftretenden Neigung des Verteilergestänges ermöglichen. Weiterhin wird die Effizienz der Neigungsregelung des Verteilergestänges durch den Einsatz von Drucksensoren verbessert. Mittels der Sperrventile kann das Verteilergestänge vorteilhafterweise in einer starren Position gehalten werden. Dies ist besonders vorteilhaft beim Fahren des landwirtschaftlichen Nutzfahrzeuges auf einer Straße oder beim Ein- und Ausklappen des Verteilergestänges. Da die Sperrventile geschlossen werden können, kann kein Fluid mehr aus dem Hydraulikzylinder entweichen und das Verteilergestänge kann bei Bedarf fixiert am landwirtschaftlichen Nutzfahrzeug gehalten werden.

Die erfindungsgemäße Anordnung des Sperrventils zwischen dem jeweiligen Drucksensor und Druckregelventil hat den Vorteil, dass der Druck im Neigungszylinder sowohl bei geschlossenem oder geöffnetem Sperrventil erfasst werden kann. Daher lässt sich sowohl der vorherrschende Druck der Druckregelventile beim Einsatz von Sperrventilen, als auch ohne vorhandene Sperrventile präzise messen.

Generell hat die Erfindung den Vorteil, dass die Neigungseinstellung des Verteilergestänges verbessert beeinflusst wird. Damit kann eine weitgehend homogene Ausgabe von Düngemittel, Pflanzenschutzmittel oder Saatgut gewährleistet werden und eine Beschädigung des Verteilergestänges kann effizient vermieden werden. Dies erhöht die Wirtschaftlichkeit des landwirtschaftlichen Nutzfahrzeuges.

Bevorzugte Ausführungsformen der Erfindung sind in den Unteransprüchen angegeben.

In einer bevorzugten Ausführungsform umfasst die Regeleinheit ein Stellorgan, das durch wenigstens einen pneumatisch und/oder hydraulisch arbeitenden Zylinder, insbesondere einen doppeltwirkenden Hydraulikzylinder, gebildet ist. Derartige Zylinder bilden kostengünstige und einfache Mittel zur Rückführung des Verteilergestänges bei einer auftretenden Neigung in seine horizontale Ausgangslage. Der doppeltwirkende Hydraulikzylinder kann beispielsweise mit einem Kolben ausgebildet sein, welcher beidseitig mit Druck beaufschlagbar ist, sodass die Bewegung des Verteilergestänges in einer entgegengesetzten Richtung beeinflusst werden kann. Das Stellorgan ist hierbei vorzugsweise an einem Rahmen angebracht, an welchem das Verteilergestänge befestigt ist und gehalten wird. Das Stellorgan kann hierbei zweckmäßigerweise auch direkt mit dem Verteilergestänge selbst verbunden sein. Dies hat den Vorteil, dass das Stellorgan direkt eine mechanische Kraftauswirkung auf das Verteilergestänge ausüben kann. Dadurch wird eine sichere und präzise Neigungsverstellung gewährleistet. Es sind generell verschiedene Arten von Stellorganen denkbar, wie beispielsweise Pneumatikzylinder, Elektromotoren oder Hydraulikmotoren.

In einer besonders bevorzugten Ausführungsform ist die Regeleinheit so konfiguriert, dass bei einem Öffnen der Sperrventile die Druckregelventile an den Druck angepasst sind, welcher von dem jeweiligen Drucksensor gemessen ist. Der Drucksensor ist hierzu zweckmäßigerweise zwischen dem Sperrventil und dem Stellorgan angeordnet. Die Drucksensoren und die Druckregelventile können mit der Regeleinheit gekoppelt sein. Dadurch kann ein gemessener Druckwert der Drucksensoren über ein elektronisches Signal der Regeleinheit an die Druckregelventile weitergegeben werden, und die Druckregelventile auf den gemessenen Druckwert als Sollwert eingestellt werden.

Da es beim Öffnen der Sperrventile sehr leicht zu unkontrollierten Bewegungen des Verteilergestänges kommen kann, ist die Regelung der Neigungseinstellung vorteilhafterweise beim Vorgang des Öffnens der Sperrventile präzise auf den Sollwert, welcher vom Drucksensor gemessen wird, angepasst. Der Vorgang des Öffnens der Sperrventile umfasst hier sowohl den Zeitpunkt kurz vor dem Öffnen, während des Öffnens oder kurz nach dem Öffnen. Auf diese Weise können schnell und effizient unkontrollierte Bewegungen des Verteilergestänges verhindert werden.

Vorzugsweise sind die Druckregelventile in gleichen und/oder verschiedenen Stellungen unabhängig voneinander ein- und/oder verstellbar. Das bedeutet, dass die beiden Druckregelventile jeweils unabhängig über ein elektronisches Signal von der Regeleinheit angesteuert werden können und auf einen verschiedenen Sollwert eingestellt werden können. Daher ist die Regelvorrichtung effizient sowohl für symmetrische, als auch für asymmetrische Verteilergestänge verwendbar. Vor allem bei asymmetrischen Verteilergestängen, welche rechtsseitig und linksseitig von einer zentralen Aufhängung des Verteilergestänges eine unterschiedliche Arbeitsbreite aufweisen, herrscht aufgrund der unterschiedlichen Masseverteilung ein unterschiedlicher Druck. Da die beiden Druckregelventile unabhängig voneinander ein- und/oder verstellbar sind, können auch Druckunterschiede am Verteilergestänge präzise erfasst und ausgeglichen werden. Dadurch kann auch ein asymmetrisches Verteilergestänge sicher in einer horizontalen Lage in Relation zum Boden gehalten werden.

Vorteilhafterweise sind die Druckregelventile durch Proportionalventile, insbesondere 3-Wege-Ventile, gebildet. Beispielsweise können derartige Ventile als direkt gesteuerte Kolbenschieberventile mit ausgangsseitiger Druckabsicherung ausgebildet sein. Die Ventile können hierzu einen Ventilkörper mit einem Regelkolben, einer Rückstellfeder und einer Magnetspule mit Magnetanker zur elektrischen Betätigung umfassen. Wenn ein elektrisches Signal über die Regeleinheit angelegt wird, kann der Magnetanker mit einer dem Signal entsprechenden Kraft auf den Regelkolben drücken. Dadurch kann Öl durch das Ventil strömen und Druck auf- oder abgebaut werden, wodurch das Stellorgan aktiviert werden kann. Dies geschieht solange, bis der anliegende Druck der Druckwert-Vorgabe des elektrischen Signals entspricht. Generell beruht die Funktionsweise von Proportionalventilen auf einer Regelung eines auftretenden Druckunterschieds. Wird ein voreingestelltes Druckniveau unterschritten, führt das Ventil selbsttätig Öl aus dem Hydraulikreservoir zu, bis der Sollwert wieder erreicht ist. Andernfalls wird bei einem zu hohen Druckniveau Öl abgelassen. Der Einsatz von Proportionalventilen bietet effiziente Steuer- und Stabilitätseigenschaften, sowie eine geringe Hysterese der Ventile, welche aufgrund von Reibung und Magnetisierung entstehen kann. Weiterhin ermöglichen Proportionalventile einen platzsparenden Einbau, sowie eine einfache Montage und Austauschbarkeit. Mit derartigen Ventilen kann der Hydraulikdruck in den Zylinderkammern des Stellorgans unabhängig voneinander eingestellt werden und so aktiv die Neigung des Verteilergestänges beeinflusst werden. Weiter vorteilhafterweise sind, basierend auf einem gemessenen Signal des jeweiligen Drucksensors oder einem anderweitig ermittelten Istwert, die Druckregelventile unabhängig voneinander an einen Sollwert anpassbar. Die unabhängige Anpassung der Druckregelventile an einen Sollwert, ist besonders vorteilhaft für asymmetrische Verteilergestänge. Es ist generell denkbar, dass zusätzlich zu den Drucksensoren noch weitere Sensoren, wie beispielsweise Neigungssensoren oder Abstandssensoren eingesetzt werden, um die Neigung des Verteilergestänges zu bestimmen.

In einer bevorzugten Ausführungsform sind die Druckregelventile anhand einer bekannten Kennlinie elektronisch gesteuert auf einen Sollwert einstellbar. Die Kennlinien beschreiben beispielsweise den Zusammenhang zwischen einem auftretenden Druck und dem zugehörigen benötigten elektrischen Strom an einer Steuerspule des Ventils. Beispielhaft kann über die Drucksensoren ein einzustellender Sollwert der Druckregelventile ermittelt werden, wodurch anhand der Kennlinie ein Steuerstrom auf die Ventile geschaltet wird, um den entsprechenden Druck einzustellen. Dies hat den Vorteil, dass über die Kennlinie der Druckregelventile der Druck auf das Verteilergestänge präzise an einen Sollwert angepasst werden kann.

Vorzugsweise sind die Druckregelventile zur Feinjustierung an einen Sollwert, welcher dem gemessenen Druck bei geschlossenen Sperrventilen entspricht, mittels eines geschlossenen Regelkreises anpassbar. Da die Kennlinie der Druckregelventile gewisse Fertigungstoleranzen und eine Hysterese besitzt, wird für die Feinjustierung des einzustellenden Drucks in den Druckregelventilen, das elektronische Signal basierend auf der Kennlinie, mittels eines geschlossenen Regelkreises zusätzlich korrigiert. Vorteilhafterweise wird dadurch die Anpassung der Druckregelventile weiter verbessert.

In einer weiteren bevorzugten Ausführungsform ist der von den Drucksensoren gemessene Druckwert zur Einstellung des Sollwerts mittels einer Filterfunktion geglättet und/oder gemittelt. Dies hat den Vorteil, dass sogenannte Druckspitzen, welche Fehlmessungen der Drucksensoren darstellen, effizient vorgebeugt und korrigiert werden können.

In einer bevorzugten Ausführungsform weisen die beiden Druckregelventile bei einer symmetrischen, horizontal ausgerichteten Lage des Verteilergestänges, einen identischen Druck, insbesondere von 70 - 90 bar, auf. Ein symmetrisches Verteilergestänge weist generell auf beiden Seiten der zentralen Aufhängung die gleiche Arbeitsbreite auf. Daher liegt auf dem Stellorgan an beiden Seiten der gleiche Druck durch die rechtsseitige und linksseitige Masse des Verteilergestänges an. Der Druckunterschied ist daher nahezu 0bar. Es ist demnach zweckmäßig, die Druckregelventile auf ein identisches Druckniveau einzustellen und dieses beizubehalten. Bei einer auftretenden Neigung des Verteilergestänges, kann der auftretende Druckunterschied an den Druckregelventilen über die Regelvorrichtung wieder an den ursprünglichen beidseitig identischen Druck angepasst werden. Es kann daher zu gleichen Anteilen in den jeweiligen Zylinderkammern der Druck erhöht, beziehungsweise erniedrigt werden, um das Verteilergestänge in die horizontale Ausgangslage zurückzuführen.

In einer weiteren Ausführungsform weisen die beiden Druckregelventile bei einer asymmetrisch oder geneigt ausgerichteten Lage des Verteilergestänges, eine Druckdifferenz auf. Damit sich das Verteilergestänge nicht noch stärker zu der geneigten Seite hin bewegt, muss diese Druckdifferenz über die Druckregelventile gehalten werden. Die Ventile werden hierzu zweckmäßigerweise über die Regeleinheit derart mit einem elektrischen Signal angesteuert, dass der Druckunterschied aufrechterhalten wird und sich das Verteilergestänge nicht dreht.

Im Rahmen der Erfindung wird weiterhin ein landwirtschaftliches Nutzfahrzeug zum Ausbringen von Material, wie Düngemittel, Pflanzenschutzmittel oder Saatgut, mit einem Verteilergestänge und einer Regelvorrichtung nach einem der vorhergehenden Ausführungsformen beansprucht. Durch die erfindungsgemäße Regelvorrichtung kann effizient die Neigung des Verteilergestänges relativ zum Boden beeinflusst werden und die Gefahr von unkontrollierten Bewegungen des Verteilergestänges, insbesondere beim Öffnen von Sperrventilen, kann verringert werden. Dadurch ist eine homogene Ausbringung des Materials gewährleistet.

Weiterhin wird im Rahmen der Erfindung ein Verfahren zum Betreiben eines landwirtschaftlichen Nutzfahrzeuges mit einem Verteilergestänge zum Ausbringen von Material, wie Düngemittel, Pflanzenschutzmittel oder Saatgut, beansprucht. Das landwirtschaftliche Nutzfahrzeug umfasst eine Regelvorrichtung mit einer Regeleinheit und wenigstens zwei Druckregelventile zur Regelung der Neigung des Verteilergestänges, welche mit der Regeleinheit verbunden sind. Jedem Druckregelventil ist ein Sperrventil und ein Drucksensor zugeordnet, wobei das Sperrventil zwischen dem Drucksensor und dem Druckregelventil angeordnet ist und die Regeleinheit so konfiguriert ist, dass bei einem Öffnen der Sperrventile die Druckregelventile an einen Sollwert angepasst werden. Der Sollwert ist hierzu zweckmäßigerweise der von dem jeweiligen Drucksensor gemessene Druckwert zwischen dem jeweiligen Druckregelventil und dem Stellorgan. Das bedeutet, dass zweckmäßigerweise vor einem Öffnen der Sperrventile die Druckregelventile auf jenen Sollwert angepasst und eingestellt werden, welchen die jeweiligen Drucksensoren messen. Somit können effizient unkontrollierte Bewegungen nach dem Öffnen der Sperrventile vorgebeugt werden. Der Sollwert kann zweckmäßigerweise durch eine bestimmte Druckdifferenz des Verteilergestänges gebildet sein. Diese Druckdifferenz richtet sich nach der symmetrischen oder asymmetrischen Ausrichtung des Verteilergestänges.

Vorzugsweise werden die Druckregelventile anhand einer bekannten Kennlinie elektronisch gesteuert auf einen Sollwert eingestellt. Das bedeutet, dass über die Drucksensoren ein notwendiger Sollwert für jedes der beiden Druckregelventile ermittelt wird. Anschließend wird über die bekannte Kennlinie der Druckregelventile der, dem Sollwert entsprechende, Steuerstrom auf die Druckregelventile geschaltet. Das Ventil schaltet daraufhin in der Weise, dass der gewünschte Druck an der entsprechenden Seite des Stellorgans ansteht. Damit kann der Druck auf das Verteilergestänge mittels der Druckregelventile präzise an einen Sollwert angepasst werden und damit effizient die Neigung des Verteilergestänges beeinflusst werden.

In einer weiteren bevorzugten Ausführungsform erfolgt zur Feinjustierung der Druckregelventile eine Anpassung an einen Sollwert mittels eines geschlossenen Regelkreises. Aufgrund von Fertigungstoleranzen und einer möglichen Hysterese, wird für die Feinjustierung des einzustellenden Drucks in den Druckregelventilen, das elektronische Signal basierend auf der Kennlinie, mittels eines geschlossenen Regelkreises zusätzlich korrigiert. Hierzu wird über die Drucksensoren der IstWert in den Zylinderkammern des Stellorgans erfasst und über einen Sollwert-Istwert Vergleich mittels des Regelkreises angepasst. Es können beispielhaft ein P-Regler, basierend auf einer Proportionalität, oder ein PI-Regler, basierend auf einer proportionalen und integralen Wirkungsweise, verwendet sein. Es können also bei geöffnetem Sperrventil die Drucksensoren zur Feinjustierung der Druckregelventile verwendet werden.

Weiter vorzugsweise wird der von den Drucksensoren gemessene Druckwert zur Einstellung des Sollwerts mittels einer Filterfunktion geglättet und/oder gemittelt. Dadurch kann besonders effizient Druckspitzen, also eventuellen Fehlmessungen der Drucksensoren, vorgebeugt werden. Das bedeutet, dass der gemessene Wert der Drucksensoren nicht direkt als Sollwert verwendet wird, sondern als korrigiertes Signal an die Regeleinheit übergeben wird. Die Glättung mittels einer Filterung und/oder die Mittelung wird kontinuierlich bei jeder Messung ausgeführt.

Die Erfindung wird nachstehend mit weiteren Einzelheiten unter Bezug auf die beigefügten schematischen Zeichnungen näher erläutert. Darin zeigen
- Fig. 1: einen Detailausschnitt auf ein Verteilergestänge an einem Rahmen mit einer erfindungsgemäßen Regelvorrichtung;
- Fig. 2a-d: jeweils eine Heckansicht eines landwirtschaftlichen Nutzfahrzeuges mit einer Regelvorrichtung und einem symmetrischen Verteilergestänge nach einem erfindungsgemäßen Ausführungsbeispiel, sowie einen Detailausschnitt der Regelvorrichtung gemäß Fig. 1;
- Fig. 3a-d: jeweils eine Heckansicht eines landwirtschaftlichen Nutzfahrzeuges mit einer Regelvorrichtung und einem asymmetrischen Verteilergestänge nach einem weiteren erfindungsgemäßen Ausführungsbeispiel, sowie einen Detailausschnitt der Regelvorrichtung gemäß Fig. 1;
- Fig. 4a-d: jeweils eine Heckansicht eines landwirtschaftlichen Nutzfahrzeuges mit einer Regelvorrichtung und einem asymmetrischen Verteilergestänge nach einem dritten erfindungsgemäßen Ausführungsbeispiel, sowie einen Detailausschnitt der Regelvorrichtung gemäß Fig. 1.

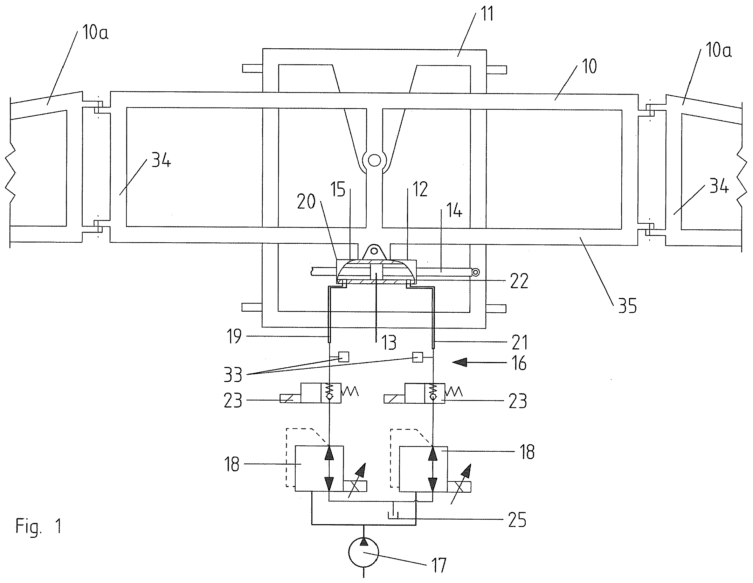

Fig. 1 zeigt einen Detailausschnitt auf ein Verteilergestänge 10 an einem Rahmen 11 mit einer erfindungsgemäßen Regelvorrichtung. Das Verteilergestänge 10 dient dem Ausbringen von Material, wie Düngemittel, Pflanzenschutzmittel oder Saatgut. Die Regelvorrichtung umfasst eine nicht dargestellte Regeleinheit und zwei Druckregelventile 18 zur Regelung der Neigung des Verteilergestänges 10, welche mit der Regeleinheit verbunden sind. Jedem Druckregelventil 18 ist ein Sperrventil 23 und ein Drucksensor 33 zugeordnet, wobei das Sperrventil 23 zwischen dem Drucksensor 33 und dem Druckregelventil 18 angeordnet ist.

Der in Fig. 1 dargestellte Rahmen 11 ist beispielhaft drehfest mit dem landwirtschaftlichen Nutzfahrzeug verbunden und kann zweckmäßigerweise höhenverstellbar ausgebildet sein. Der Rahmen 11 ist durch mehrere Streben beispielhaft in Form eines Rechtecks gebildet. Der Rahmen 11 bildet die Aufhängung für das Verteilergestänge 10.

Der Detailausschnitt zeigt den mittleren Teil des Verteilergestänges 10, sowie zwei angrenzende Segmente 10a des Verteilergestänges 10. Die einzelnen Segmente 10a können durch Horizontalstreben 35 und Vertikalstreben 34 gebildet sein.

Zur Einstellung der Neigung des Verteilergestänges 10 ist ein Stellorgan 12 und eine Regelvorrichtung zur Betätigung des Stellorgans 12 vorgesehen. Das Stellorgan 12 ist einerseits direkt mit dem Rahmen 11 und andererseits direkt mit dem Verteilergestänge 10 mechanisch verbunden. Das Stellorgan 12 ist als doppeltwirkender Hydraulikzylinder ausgebildet, der einen Kolben 13 in einem Gehäuse 15 aufweist, welcher beidseitig mit Druck beaufschlagbar ist. Auf beiden Seiten des Kolbens 13 sind Kolbenstangen 14 angeordnet. Eine der beiden Kolbenstangen 14 ist mit dem Rahmen 11 mechanisch verbunden, die andere Kolbenstange 14 weist ein freies Ende auf. Die Kraftübertragung vom Rahmen 11 auf das Verteilergestänge 10 erfolgt daher durch das Stellorgan 12 in direkter Weise. Generell kann das Stellorgan auch durch einen Zylinder gebildet sein, welcher auf beiden Seiten ein unterschiedliches Flächenverhältnis aufweist. Beispielsweise ist ein Zylinder denkbar, welcher eine Ring- und eine Kolbenfläche mit unterschiedlichen Flächen aufweist.

Zur Kraftübertragung und damit zur Neigungseinstellung ist das Stellorgan 12 mit einem Hydraulikkreislauf 16 verbunden. Der Hydraulikkreislauf 16 ist durch einen offenen Kreislauf gebildet, welcher ein Hydraulikreservoir 25 und eine Pumpe 17 umfasst. Zwischen der Pumpe 17 und dem Hydraulikreservoir 25 Einerseits, und dem Stellzylinder 12 andererseits sind zwei Druckregelventile 18 angeordnet. Anders gesagt verbinden die Druckregelventile 18 die Pumpe 17 und das Hydraulikreservoir 25 mit den beiden Druckseiten 20, 22 des Stellorgans 12. Hierzu weist der Hydraulikkreislauf 16 erste und zweite Zuführleitungen 19, 21 zwischen dem Stellorgan 12 und den jeweiligen Druckregelventil 18 auf.

Die Regelvorrichtung weist weiterhin zwei Drucksensoren 33 auf. Die Drucksensoren 33 sind zwischen dem Stellorgan 12 und dem jeweiligen Druckregelventil 18 angebracht. Mit den Drucksensoren 33 kann der auftretende Druck in der ersten und zweiten Zuführleitung 19, 21 gemessen werden. Diese Messsignale werden zur Regelung der Druckregelventile 18 über die nicht dargestellte Regeleinheit verarbeitet. Die Druckregelventile 18 werden dann zweckmäßigerweise je nach gemessenem Druck mittels der Kennlinien der betreffenden Ventile angepasst.

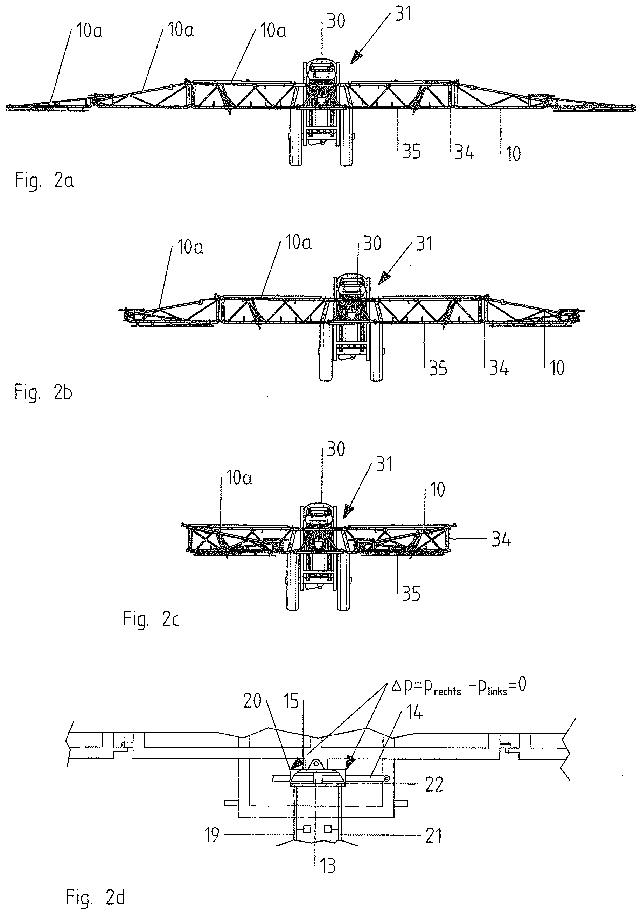

Die Figuren 2a-c zeigen jeweils in schematischer Weise eine Heckansicht einer Maschine 31, welche als Feldspritze ausgebildet ist. Die Feldspritze kann von einem Zugfahrzeug gezogen werden, selbstfahrend sein oder an ein landwirtschaftliches Nutzfahrzeug angebaut sein. Den Figuren 2a-c ist gemeinsam, dass die Maschine 31 ein Verteilergestänge 10 und einen Vorratsbehälter 30 umfasst, in welchem auszubringendes Material, wie beispielsweise Düngemittel, Pflanzenschutzmittel oder Saatgut untergebracht ist. Das Verteilergestänge 10 weist hierzu Sprühdüsen auf, welche an der Unterseite des Verteilergestänges 10 entlang angeordnet sind. Die Sprühdüsen können durch ein Schlauchsystem mit einer Pumpe und dem Vorratsbehälter 30 verbunden sein. Das Verteilergestänge 10 ist vorteilhafterweise für den Straßenverkehr klappbar ausgestaltet.

Die Figuren 2 a - c unterscheiden sich durch die Breite des Verteilergestänges 10. Hierbei ist in Fig. 2a das Verteilergestänge vollständig ausgeklappt. Es besteht auf jeder Seite des Gestänges aus drei Segmenten 10a und einem zentralen Segment in der Mitte. Fig. 2b zeigt das Verteilergestänge 10 mit auf beiden Seiten eingeklapptem äußerem Segment 10a. In Fig. 2c sind demgegenüber jeweils die äußeren beiden Segmente 10a eingeklappt. Das Verteilergestänge 10, beziehungsweise die Segmente 10a sind jeweils durch Horizontalstreben 35 und Vertikalstreben 34 gebildet.

Das Verteilergestänge 10 ist zentral an einem Rahmen der Maschine 30 aufgehängt. Eine Verstellung der Gesamtneigung des Verteilergestänges 10, also eine Verstellung des ausgeklappten, geraden Verteilergestänges 10 ist durch eine Regelvorrichtung gemäß Fig. 1 möglich.

Fig. 2d zeigt hierzu einen Detailausschnitt der Regelvorrichtung gemäß Fig. 1 mit den eingestellten Druckverhältnissen für das symmetrisch gelagerte Verteilergestänge 10. Die Druckdifferenz Δp zwischen der linksseitigen ersten Druckseite 20 und der rechtsseitigen zweiten Druckseite 22 des Stellorgans 13 ist gleich Null. Beide Druckseiten sind daher auf denselben Druck eingestellt. Für ein symmetrisch gelagertes Verteilergestänge 10 kann dieser Druck beispielsweise im Bereich von 70 - 90bar liegen.

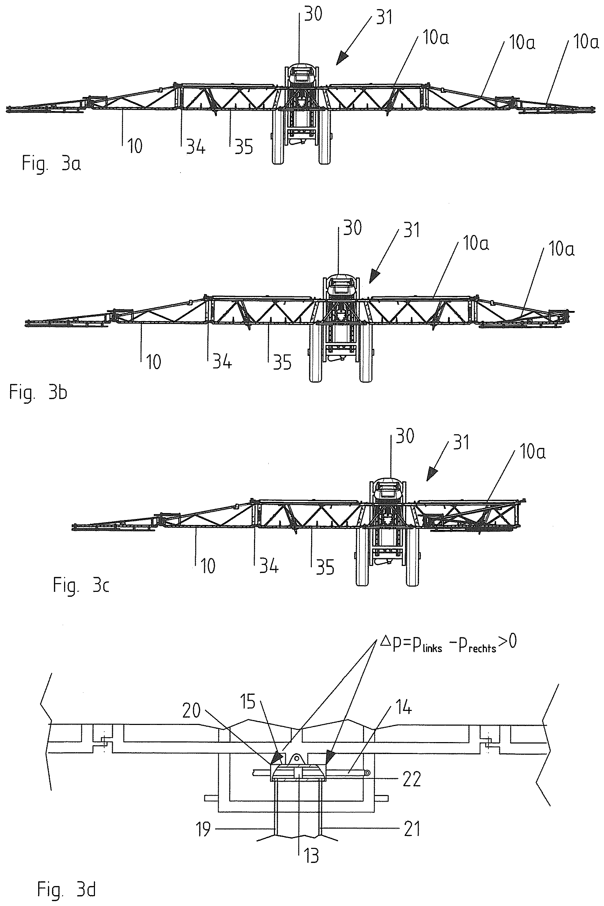

Die Figuren 3a-c zeigen jeweils in schematischer Weise eine Heckansicht einer Maschine 31, welche als Feldspritze ausgebildet ist. Die Feldspritze ist ähnlich wie in Fig. 2 ausgebildet mit einem Verteilergestänge 10 und einen Vorratsbehälter 30, in welchem auszubringendes Material untergebracht ist. Die Figuren 3a-c unterscheiden sich durch die Arbeitsbreite des Verteilergestänges. Das Verteilergestänge 10 ist in Fig. 3a beispielhaft durch drei Segmente 10a zu beiden Seiten des Vorratsbehälters 30 gebildet. In Fig. 3b sind es rechtsseitig nur drei Segmente 10a, da das äußere Segment 10a sich im eingeklappten Zustand befindet. In Fig. 3c ist rechtsseitig nur ein Segment 10a ausgeklappt, während die äußeren beiden eingeklappt sind. Das Verteilergestänge 10 ist demnach beispielhaft asymmetrisch gelagert, da in den Figuren 3b und 3c auf beiden Seiten des Vorratsbehälters 30 nicht dieselbe Anzahl an Segmenten 10a im ausgeklappten Zustand ist. Generell gilt für ein asymmetrisches Verteilergestänge 10, dass es sich zu beiden Seiten in der Anzahl der ausgeklappten Segmente 10a, oder generell gesagt in der Arbeitsbreite unterscheidet.

Es kommt daher vorzugsweise in den Fig. 3b und 3c zu einer Druckdifferenz Δp. Die Druckdifferenz Δp entsteht dadurch, dass das Verteilergestänge 10 rechtsseitig und linksseitig eine unterschiedliche Masseverteilung aufweist. Diese unterschiedliche Masseverteilung kann beispielhaft auch bei dem symmetrisch gelagerten Verteilergestänge 10 in Fig. 3a entstehen, wenn eine linksseitig ausgerichtete Neigung auftritt.

Eine Verstellung der Gesamtneigung des Verteilergestänges 10, also eine Verstellung des ausgeklappten, geraden Verteilergestänges 10 ist durch eine Regelvorrichtung gemäß Fig. 1 möglich.

Fig. 3d zeigt hierzu einen Detailausschnitt der Regelvorrichtung gemäß Fig. 1 mit den eingestellten Druckverhältnissen für das asymmetrisch gelagerte oder linksseitig geneigte Verteilergestänge 10. Die Druckdifferenz Δp zwischen der linksseitigen ersten Druckseite 20 und der rechtsseitigen zweiten Druckseite 22 des Stellorgans 12 ist größer Null. Demnach ist der linksseitige Druck größer als der rechtsseitige Druck. Soll nun beispielsweise nach einem nur teilweisen Ausklappen oder Einklappen des Verteilergestänges 10, also bei einer Situation wie beispielsweise in Fig. 3c dargestellt, bei geschlossenen Sperrventilen 23 ein abruptes Absacken des Verteilergestänges 10 nach dem Öffnen der Sperrventile 23 vermieden werden, so werden die Ventile 18 zweckmäßigerweise über die Regeleinheit derart mit einem elektrischen Signal angesteuert, dass die Druckdifferenz nach dem Öffnen der Sperrventile 23 aufrechterhalten wird und sich das Verteilergestänge 10 beim Öffnen der Sperrventile 23 nicht dreht. Hierdurch wird erreicht, dass beim Öffnen der Sperrventile 23 der zwischen den Sperrventilen 23 und der jeweiligen Seite des Stellorgans 12 herrschende Druck zumindest annähernd auch vor dem jeweiligen Sperrventil 23 ansteht.

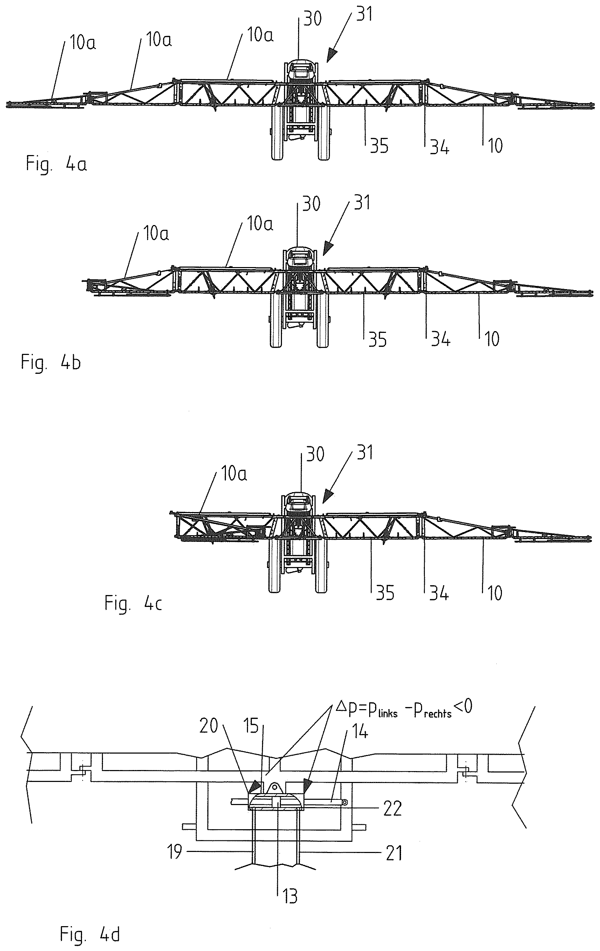

Die Figuren 4a-c zeigen jeweils in schematischer Weise eine Heckansicht einer Maschine 31, welche als Feldspritze ausgebildet ist. Die Feldspritze ist ähnlich wie in Fig. 2 ausgebildet und umfasst ein Verteilergestänge 10 und einen Vorratsbehälter 30 mit auszubringendem Material. Die Figuren 4a-c unterscheiden sich durch die Arbeitsbreite des Verteilergestänges. Das Verteilergestänge 10 ist in Fig. 4a beispielhaft durch drei Segmente 10a zu beiden Seiten des Vorratsbehälters 30 und ein zentrales Segment 10a gebildet. In Fig. 4b sind es linksseitig nur drei Segmente 10a, das äußere Segment 10a ist eingeklappt In Fig. 4c ist linksseitig nur ein Segment 10a ausgeklappt, die beiden äußeren Segmente 10a sind eingeklappt. Das Verteilergestänge 10 ist demnach wie in den Figuren 3b und 3c asymmetrisch gelagert, da es in den Figuren 4b und 4c auf beiden Seiten des Vorratsbehälters 30 nicht dieselbe Anzahl an ausgeklappten Segmenten 10a aufweist. Es kommt daher ebenso in den Fig. 4b und 4c zu einer Druckdifferenz Δp. Die Druckdifferenz Δp kann beispielhaft auch bei dem symmetrisch gelagerten Verteilergestänge 10 in Fig. 4a entstehen, wenn eine rechtsseitig ausgerichtete Neigung auftritt.

Eine Verstellung der Gesamtneigung des Verteilergestänges 10, also eine Verstellung des ausgeklappten, geraden Verteilergestänges 10 ist durch eine Regelvorrichtung gemäß Fig. 1 möglich.

Fig. 4d zeigt hierzu einen Detailausschnitt der Regelvorrichtung gemäß Fig. 1 mit den eingestellten Druckverhältnissen für das asymmetrisch gelagerte oder rechtsseitig geneigte Verteilergestänge 10. Die Druckdifferenz Δp zwischen der linksseitigen ersten Druckseite 20 und der rechtsseitigen zweiten Druckseite 22 des Stellorgans 13 ist negativ. Demnach ist der linksseitige Druck kleiner als der rechtsseitige Druck. Damit sich das Verteilergestänge 10 bei einem Öffnen der Sperrventile 23 nicht auf der rechten Seite nach unten bewegt, muss diese Druckdifferenz vorteilhafterweise über die Druckregelventile 18 beim Öffnen der Sperrventile 23 gehalten werden.

Generell kann die erfindungsgemäße Regelvorrichtung zur Neigungsregelung und Vermeidung von unkontrollierten Bewegungen effizient für symmetrische oder asymmetrische Verteilergestänge mit einer beliebigen Arbeitsbreite verwendet werden.

Insbesondere ist die erfindungsgemäße Regelvorrichtung derart ausgebildet, dass die Druckregelventile 18 zum Zeitpunkt des Öffnens der Sperrventile zumindest annähernd an den, durch die Drucksensoren 33 gemessenen, Druck der jeweiligen Stellseite angepasst sind.

Hierdurch lässt sich verhindern, dass beispielsweise bei einem asymmetrischen Ausklappen des Verteilergestänges 10, wie in Fig. 4 a - c dargestellt, bei geschlossenen Sperrventilen 23 das Verteilergestänge 10 nach dem Öffnen der Sperrventile 23 eine unkontrollierte Bewegung im Uhrzeigersinn ausführt oder bei einer Situation gemäß Fig. 3 a - c eine Bewegung entgegen des Uhrzeigersinns.

Zu diesem Zweck werden vor dem Öffnen der Sperrventile 23 die Druckregelventile 18 derart angesteuert, dass zumindest annähernd die durch die Drucksensoren 33 gemessenen Drücke der linken und rechten Druckseite des Stellorgans 12 an den Sperrventilen 23 anstehen, so dass keine unkontrollierte Druckänderung nach dem Öffnen der Sperrventile 23 und eine hierdurch hervorgerufene unkontrollierte Bewegung des Verteilergestänges 10 zu erwarten ist. Mittels der in der Regeleinheit für das jeweilige Druckregelventil hinterlegten Kennlinien, dies können auch identische, insbesondere generische Kennlinien sein, werden also entsprechend des mit dem jeweiligen Drucksensor 33 gemessenen Wertes durch die Regeleinheit die Signale zur Ansteuerung des Druckregelventils 18 generiert.

Aufgrund von Hysterese oder Fertigungstoleranzen, kann es hierbei zu einer Einstellung eines abweichenden Druckwertes von dem aus der Kennlinie zu erwartenden Druckwertes kommen. Zu diesem Zweck kann zusätzlich ein Regelkreis für die jeweilige Druckseite 20, 22 vorgesehen sein, welcher nach dem Öffnen des jeweiligen Sperrventils 23 den gemessenen Druckwert mittels des Drucksensors 33 mit dem gewünschten Sollwert, der vor dem Öffnen des Sperrventils 23 ermittelt wurde vergleicht und ggf. eine Anpassung der Stellung des Druckregelventils 18 vornimmt. Dieser Regler kann beispielsweise als PI-Regler ausgebildet sein. Der Sollwert kann auch zeitlich veränderbar sein, wenn beispielsweise im Anschluss an das Öffnen des Sperrventils 23 eine definierte Neigung des Verteilergestänges 10 eingestellt werden soll.

### Bezugszeichenliste

- 10: Verteilergestänge
- 10a: Segment
- 11: Rahmen
- 12: Stellorgan
- 13: Kolben
- 14: Kolbenstange
- 15: Gehäuse
- 16: Hydraulikkreislauf
- 17: Pumpe
- 18: Druckregelventil
- 19: erste Zuführleitung
- 20: erste Druckseite
- 21: zweite Zuführleitung
- 22: zweite Druckseite
- 23: Sperrventil
- 25: Hydraulikreservoir
- 30: Vorratsbehälter
- 31: Maschine
- 33: Drucksensor
- 34: Vertikalstrebe
- 35: Horizontalstrebe

## Patentansprüche

1. Regelvorrichtung für ein landwirtschaftliches Nutzfahrzeug mit einem Verteilergestänge (10) zum Ausbringen von Material, wie Düngemittel, Pflanzenschutzmittel oder Saatgut, umfassend eine Regeleinheit und wenigstens zwei Druckregelventile (18) zur Regelung der Neigung des Verteilergestänges (10), welche mit der Regeleinheit verbunden sind,
**dadurch gekennzeichnet, dass**
jedem Druckregelventil (18) ein Sperrventil (23) und ein Drucksensor (33) zugeordnet ist, wobei das Sperrventil (23) zwischen dem Drucksensor (33) und dem Druckregelventil (18) angeordnet ist.

2. Regelvorrichtung nach Anspruch 1,
**dadurch gekennzeichnet, dass**
die Regeleinheit ein Stellorgan (12) umfasst, das durch wenigstens einen pneumatisch und/oder hydraulisch arbeitenden Zylinder, insbesondere doppeltwirkenden Hydraulikzylinder, gebildet ist.

3. Regelvorrichtung nach einem der vorhergehenden Ansprüche,
**dadurch gekennzeichnet, dass**
die Regeleinheit so konfiguriert ist, dass bei einem Öffnen der Sperrventile (23) die Druckregelventile (18) an den Druck angepasst sind, welcher von dem jeweiligen Drucksensor (33) gemessen ist.

4. Regelvorrichtung nach einem der vorhergehenden Ansprüche,
**dadurch gekennzeichnet, dass**
die Druckregelventile (18) in gleichen und/oder verschiedenen Stellungen unabhängig voneinander ein- und/oder verstellbar sind.

5. Regelvorrichtung nach einem der vorhergehenden Ansprüche,
**dadurch gekennzeichnet, dass**
die Druckregelventile (18) durch Proportionalventile, insbesondere 3-Wege-Ventile, gebildet sind.

6. Regelvorrichtung nach einem der vorhergehenden Ansprüche,
**dadurch gekennzeichnet, dass**
basierend auf einem gemessenen Signal des jeweiligen Drucksensors (33) oder einem anderweitig ermittelten Istwert, die Druckregelventile (18) unabhängig voneinander an einen Sollwert anpassbar sind.

7. Regelvorrichtung nach einem der vorhergehenden Ansprüche,
**dadurch gekennzeichnet, dass**
die Druckregelventile (18) anhand einer bekannten Kennlinie elektronisch gesteuert auf einen Sollwert einstellbar sind.

8. Regelvorrichtung nach einem der vorhergehenden Ansprüche,
**dadurch gekennzeichnet, dass**
die Druckregelventile (18) zur Feinjustierung an einen Sollwert, welcher dem gemessenen Druck bei geschlossenen Sperrventilen (23) entspricht, mittels eines geschlossenen Regelkreises anpassbar sind.

9. Regelvorrichtung nach einem der vorhergehenden Ansprüche,
**dadurch gekennzeichnet, dass**
der von den Drucksensoren (33) gemessene Druckwert zur Einstellung des Sollwerts mittels einer Filterfunktion geglättet und/oder gemittelt ist.

10. Regelvorrichtung nach einem der vorhergehenden Ansprüche,
**dadurch gekennzeichnet, dass**
bei einer symmetrischen, horizontal ausgerichteten Lage des Verteilergestänges (10) die beiden Druckregelventile (18) einen identischen Druck, insbesondere von 70 - 90 bar, aufweisen.

11. Regelvorrichtung nach einem der vorhergehenden Ansprüche,
**dadurch gekennzeichnet, dass**
bei einer asymmetrisch oder geneigt ausgerichteten Lage des Verteilergestänges (10) die beiden Druckregelventile (18) eine Druckdifferenz aufweisen.

12. Landwirtschaftliches Nutzfahrzeug zum Ausbringen von Material, wie Düngemittel, Pflanzenschutzmittel oder Saatgut, mit einem Verteilergestänge (10) und einer Regelvorrichtung nach einem der vorhergehenden Ansprüche.

13. Verfahren zum Betreiben eines landwirtschaftlichen Nutzfahrzeuges mit einem Verteilergestänge (10) zum Ausbringen von Material, wie Düngemittel, Pflanzenschutzmittel oder Saatgut, umfassend eine Regelvorrichtung mit einer Regeleinheit und wenigstens zwei Druckregelventile (18) zur Regelung der Neigung des Verteilergestänges (10), welche mit der Regeleinheit verbunden sind, bei der jedem Druckregelventil (18) ein Sperrventil (23) und ein Drucksensor (33) zugeordnet ist, wobei das Sperrventil (23) zwischen dem Drucksensor (33) und dem Druckregelventil (18) angeordnet ist und die Regeleinheit so konfiguriert ist, dass bei einem Öffnen der Sperrventile (23) die Druckregelventile (18) an einen Sollwert angepasst werden.

14. Verfahren nach Anspruch 13,
**dadurch gekennzeichnet, dass**
die Druckregelventile (18) anhand einer bekannten Kennlinie elektronisch gesteuert auf einen Sollwert eingestellt werden.

15. Verfahren nach Anspruch 14,
**dadurch gekennzeichnet, dass**
zur Feinjustierung der Druckregelventile (18) eine Anpassung an einen Sollwert, welcher dem gemessenen Druck bei geschlossenen Sperrventilen (23) entspricht, mittels eines geschlossenen Regelkreises erfolgt.

16. Verfahren nach Anspruch 15,
**dadurch gekennzeichnet, dass**
der von den Drucksensoren (33) gemessene Druckwert zur Einstellung des Sollwerts mittels einer Filterfunktion geglättet und/oder gemittelt wird.

## Claims

1. A control device for an agricultural vehicle having a spray boom assembly (10) for spreading material, such as fertilizers, plant protection products or seeds, comprising a control unit and at least two pressure control valves (18) used for controlling the inclination of the spray boom assembly (10) and connected to the control unit,
**characterized in that**
each pressure control valve (18) has assigned thereto a check valve (23) and a pressure sensor (33), the check valve (23) being arranged between the pressure sensor (33) and the pressure control valve (18).

2. The control device according to claim 1,
**characterized in that**
the control unit comprises an actuator (12) defined by at least one pneumatically and/or hydraulically operating cylinder, in particular a double-acting hydraulic cylinder.

3. The control device according to one of the preceding claims,
**characterized in that**
the control unit is configured such that, during opening of the check valves (23), the pressure control valves (18) are adapted to the pressure measured by the respective pressure sensor (33).

4. The control device according to one of the preceding claims,
**characterized in that**
the pressure control valves (18) are settable and/or adjustable independently of one another at identical and/or different positions.

5. The control device according to one of the preceding claims,
**characterized in that**
the pressure control valves (18) are defined by proportional valves, in particular by 3-way valves.

6. The control device according to one of the preceding claims,
**characterized in that**,
based on a measured signal of the respective pressure sensor (33) or on an actual value determined in some other way, the pressure control valves (18) are adaptable to a target value independently of one another.

7. The control device according to one of the preceding claims,
**characterized in that**
the pressure control valves (18) are adapted to be set to a target value in an electronically controlled manner on the basis of a known characteristic curve.

8. The control device according to one of the preceding claims,
**characterized in that**,
for the purpose of fine adjustment, the pressure control valves (18) are adaptable by means of a closed loop to a target value corresponding to the measured pressure in the closed condition of the check valves (23).

9. The control device according to one of the preceding claims,
**characterized in that**
the pressure value measured by the pressure sensors (33) is smoothed and/or averaged by means of a filter function for setting the target value.

10. The control device according to one of the preceding claims,
**characterized in that**,
at a symmetrical, horizontally oriented position of the spray boom assembly (10), the two pressure control valves (18) exhibit an identical pressure, in particular a pressure of 70 - 90 bar.

11. The control device according to one of the preceding claims,
**characterized in that**,
at an asymmetrical or inclined position of the spray boom assembly (10), the two pressure control valves (18) exhibit a pressure difference.

12. An agricultural vehicle for spreading material, such as fertilizers, plant protection products or seeds, comprising a spray boom assembly (10) and a control device according to one of the preceding claims.

13. A method for operating an agricultural vehicle having a spray boom assembly (10) for spreading material, such as fertilizers, plant protection products or seeds, comprising a control device with a control unit and at least two pressure control valves (18) used for controlling the inclination of the spray boom assembly (10) and connected to the control unit, wherein each pressure control valve (18) has assigned thereto a check valve (23) and a pressure sensor (33), and the check valve (23) is arranged between the pressure sensor (33) and the pressure control valve (18), and the control unit is configured such that, during opening of the check valves (23), the pressure control valves (18) will be adapted to a target value.

14. The method according to claim 13,
**characterized in that**
the pressure control valves (18) are set to a target value in an electronically controlled manner on the basis of a known characteristic curve.

15. The method according to claim 14,
**characterized in that**,
for fine adjustment of the pressure control valves (18), an adaptation to a target value corresponding to the measured pressure in the closed condition of the check valves (23) is carried out by means of a closed loop.

16. The method according to claim 15,
**characterized in that** the pressure value measured by the pressure sensors (33) is smoothed and/or averaged by means of a filter function for setting the target value.

## Revendications

1. Dispositif de régulation pour un véhicule utilitaire agricole avec une barre de distribution (10) pour distribuer des produits tels que des engrais, des produits phytosanitaires ou des semences, comprenant une unité de régulation et au moins deux vannes de régulation de pression (18) pour régulationr l'inclinaison de la barre de distribution (10), qui sont reliées à l'unité de régulation,
**caractérisé en ce que**
une vanne d'arrêt (23) et un capteur de pression (33) sont associés à chaque vanne de régulation de pression (18), la vanne d'arrêt (23) étant disposée entre le capteur de pression (33) et la vanne de régulation de pression (18).

2. Dispositif de régulation selon la revendication 1,
**caractérisé en ce que**
l'unité de régulation comprend un actionneur (12) qui est formé par au moins un cylindre à fonctionnement pneumatique et/ou hydraulique, en particulier un cylindre hydraulique à double effet.

3. Dispositif de régulation selon l'une des revendications précédentes,
**caractérisé en ce que**
l'unité de régulation est configurée de telle sorte que, lorsque les vannes d'arrêt (23) sont ouvertes, les vannes de régulation de la pression (18) sont adaptées à la pression mesurée par le capteur de pression (33) correspondant.

4. Dispositif de régulation selon l'une des revendications précédentes,
**caractérisé en ce que**
les vannes de régulation de la pression (18) peuvent être réglées et/ou réglées dans la même position et/ou dans des positions différentes indépendamment les unes des autres.

5. Dispositif de régulation selon l'une des revendications précédentes,
**caractérisé en ce que**
les vannes de régulation de pression (18) sont formées par des vannes proportionnelles, en particulier des vannes à trois voies.

6. Dispositif de régulation selon l'une des revendications précédentes,
**caractérisé en ce que**
sur la base d'un signal mesuré par le capteur de pression respectif (33) ou d'une valeur réelle déterminée d'une autre manière, les vannes de régulation de pression (18) peuvent être adaptées à une valeur de consigne indépendamment les unes des autres.

7. Dispositif de régulation selon l'une des revendications précédentes,
**caractérisé en ce que**
les vannes de régulation de pression (18) peuvent être commandées électroniquement à une valeur de consigne sur la base d'une courbe caractéristique connue.

8. Dispositif de régulation selon l'une des revendications précédentes,
**caractérisé en ce que**
les vannes de régulation de pression (18) peuvent être adaptées pour un réglage fin à une valeur souhaitée, qui correspond à la pression mesurée lorsque les vannes d'arrêt (23) sont fermées, au moyen d'une boucle de régulation fermée.

9. Dispositif de régulation selon l'une des revendications précédentes,
**caractérisé en ce que**
la valeur de la pression mesurée par les capteurs de pression (33) est lissée et/ou moyennée au moyen d'une fonction de filtrage afin d'ajuster la valeur de consigne.

10. Dispositif de régulation selon l'une des revendications précédentes,
**caractérisé en ce que**
avec une position symétrique et horizontale de la barre de distribution (10), les deux vannes de régulation de pression (18) ont une pression identique, notamment de 70 - 90 bars.

11. Dispositif de régulation selon l'une des revendications précédentes,
**caractérisé en ce que**
en cas de position asymétrique ou inclinée de la barre de distribution (10), les deux vannes de régulation de pression (18) présentent une différence de pression.

12. Véhicule utilitaire agricole pour l'épandage de produits tels qu'engrais, produits phytosanitaires ou semences, avec une barre de distribution (10) et un dispositif de régulation selon l'une des revendications précédentes.

13. Procédé pour faire fonctionner un véhicule utilitaire agricole avec une barre de distribution (10) pour l'épandage de matières, telles que des engrais, des produits phytosanitaires ou des semences, comprenant un dispositif de régulation avec une unité de régulation et au moins deux vannes de régulation de pression (18) pour la régulation de l'inclinaison de la barre de distribution (10), qui sont reliées à l'unité de régulation, dans laquelle une vanne d'arrêt (23) et un capteur de pression (33) sont associés à chaque vanne de régulation de pression (18), la vanne d'arrêt (23) étant disposée entre le capteur de pression (33) et la vanne de régulation de pression (18), et l'unité de régulation étant configurée de telle sorte que, lorsque les vannes d'arrêt (23) sont ouvertes, les vannes de régulation de pression (18) sont adaptées à une valeur de consigne.

14. Procédé selon la revendication 13,
**caractérisée en ce que**
les vannes de régulation de pression (18) sont réglées sur une valeur de consigne contrôlée électroniquement sur la base d'une courbe caractéristique connue.

15. Méthode selon la revendication 14,
**caractérisée en ce que**
pour le réglage fin des vannes de régulation de pression (18), une adaptation à une valeur de consigne, qui correspond à la pression mesurée avec des vannes d'arrêt fermées (23), est effectuée au moyen d'un circuit de régulation fermé.

16. Procédé selon la revendication 15,
**caractérisée en ce que**
la valeur de pression mesurée par les capteurs de pression (33) est lissée et/ou moyennée au moyen d'une fonction de filtrage pour ajuster la valeur souhaitée.
